(19) Europäisches Patentamt
European Patent Office
Office européen des brevets

(11) Veröffentlichungsnummer: **0 635 534 B1**

(12) **EUROPÄISCHE PATENTSCHRIFT**

(45) Veröffentlichungstag der Patentschrift: **06.12.95**

(51) Int. Cl.⁶: **C08G 77/388**, C07F 7/10, C08G 77/26

(21) Anmeldenummer: **94111382.1**

(22) Anmeldetag: **21.07.94**

# (54) Organosiliciumverbindungen mit Triazengruppen.

(30) Priorität: **26.05.94 DE 4418392**
**22.07.93 DE 4324685**

(43) Veröffentlichungstag der Anmeldung:
**25.01.95 Patentblatt 95/04**

(45) Bekanntmachung des Hinweises auf die Patenterteilung:
**06.12.95 Patentblatt 95/49**

(84) Benannte Vertragsstaaten:
**AT BE DE FR GB IT NL**

(56) Entgegenhaltungen:
**EP-A- 0 602 638**
**WO-A-91/17753**
**US-A- 4 137 226**

**DATABASE WPI Derwent Publications Ltd., London, GB; AN 72-63513T & SU-A-327 213 (ROZOVA NI GRINBLAT MP BER)**

**DATABASE WPI Derwent Publications Ltd., London, GB; AN 89-035266 & JP-A-63 307 889 (LUMIERE KK) 15. Dezember 1988**

(73) Patentinhaber: **Wacker-Chemie GmbH**
**Hanns-Seidel-Platz 4**
**D-81737 München (DE)**

(72) Erfinder: **Dauth, Jochen, Dr.**
**Piracher Strasse 78**
**D-84489 Burghausen (DE)**
Erfinder: **Deubzer, Bernward, Dr.**
**Virchowstrasse 14**
**D-84489 Burghausen (DE)**
Erfinder: **Mayer, Elfriede**
**Rosenstrasse 12**
**D-84478 Waldkraiburg (DE)**
Erfinder: **Nuyken, Oskar, Prof. Dr. Ing.**
**Ignaz-Günther-Strasse 12**
**D-81927 München (DE)**
Erfinder: **Voit, Brigitte, Dr.**
**Ingolstädterstrasse 1**
**D-80807 München (DE)**
Erfinder: **Kollefrath, Ralf, Dr.**
**Fischer-v.-Erlach-Strasse 9**
**D-80689 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Gegenstand der Erfindung sind Organosiliciumverbindungen, die Si-C gebundene organische Reste aufweisen, welche mindestens eine Triazengruppe enthalten, Verfahren zur Herstellung dieser Verbindungen, Verfahren zur Herstellung von Homopolymerisaten, Pfropfcopolymerisaten und Blockcopolymerisaten aus den erfindungsgemäßen Organosiliciumverbindungen und radikalisch polymerisierbaren organischen Verbindungen und ein Verfahren zur Vernetzung von Organosiliciumverbindungen, bzw. organischen Polymeren.

Die Verwendung von monomeren Triazenverbindungen mit organischen Resten als thermo- und/oder photosensible Radikalinitiatoren für die radikalische Polymerisation ist in US 4,137,226 beschrieben. Weiterhin wird die Verwendung von Bistriazenen als Vernetzer für fluorhaltige Polyimide und aromatische Polymere in A. Lau, L. Vo, Macromolecules 25, 7294 (1992) beschrieben.

Es ist von Vorteil, wenn Radikalinitiatoren für Silan- und Organosiloxanzusammensetzungen mit diesen Zusammensetzungen verträglich, beispielsweise vermischbar oder darin lösbar sind. Aus N. Wiberg et al., Z. Anorg. Allg. Chem. 562, 91 (1988) sind Silyltriazene bekannt, welche zwar siliciumorganische Gruppen aufweisen, jedoch sehr instabil, und teilweise explosiv sind und deshalb nicht als technisch handhabbare Initiatoren einsetzbar sind. Sie zeichnen sich außerdem durch eine kovalente Si-N-Bindung aus.

Es bestand die Aufgabe, Silane und Organosiloxane bereitzustellen, die als thermo- und/oder photosensible Radikalinitiatoren eingesetzt werden können.

Gegenstand der Erfindung sind Organosiliciumverbindungen, die mindestens einen Si-C gebundenen organischen Rest aufweisen, welcher mindestens eine Triazengruppe enthält.

Die Triazengruppe

$$-N=N-\overset{|}{N}-$$

weist drei offene Valenzen auf, die in den erfindungsgemäßen Organosiliciumverbindungen beliebig in den organischen Resten eingebunden sein können. Die Triazengruppe ist über mindestens einen zweiwertigen organischen Rest derart an die Organosiliciumverbindung gebunden, daß mindestens ein Kohlenstoffatom zwischen Siliciumatom und Stickstoffatom vorhanden ist. Gegebenenfalls vorhandene Valenzen der Triazengruppen, die nicht über einen zweiwertigen organischen Rest an die Organosiliciumverbindung gebunden sind, weisen Hydroxygruppen, oder vorzugsweise N-C oder N-O-C gebundene einwertige organische Reste auf. Die weiteren Reste an den Siliciumatomen der Organosiliciumverbindungen, welche keine Triazengruppe enthalten, sind vorzugsweise Wasserstoffatome, Halogenatome oder Si-C, Si-O oder Si-Si gebunden.

Unter Organosiliciumverbindungen sind neben Silanen und Siloxanen auch beispielsweise Carbosilane, Silazane und Disilane zu verstehen.

Beispiele für die einwertigen und zweiwertigen organischen Reste sind nachstehend als Reste **$R^1$** und **R** aufgeführt.

Bevorzugte Organosiliciumverbindungen der Erfindung sind Organosiliciumverbindungen, welche aus mindestens einer eine Triazengruppe enthaltenden Einheit der allgemeinen Formel 1

$$X-N=N-\underset{\displaystyle X}{\underset{|}{N}}-X \qquad (1)$$

in der

**X** einen Rest der allgemeinen Formel 2,

$$R-SiR^1_mO_{\frac{3-m}{2}} \qquad (2),$$

einen Rest **$R^2$** oder einen halben zweiwertigen Rest **$R^3$** bedeuten, mit der Maßgabe, daß mindestens ein **X** pro Einheit der allgemeinen Formel 1 einen Rest der allgemeinen Formel 2 bedeutet, und gegebenenfalls Einheiten der allgemeinen Formel 3

$$R^1_nSiO_{\frac{4-n}{2}} \qquad (3),$$

aufgebaut sind, wobei in den vorstehenden allgemeinen Formeln 1 bis 3 jeweils unabhängig voneinander

**R** einen zweiwertigen Si-C-gebundenen, gegebenenfalls mit Hydroxy-, $C_1$- bis $C_6$-Alkoxy-, Mercapto-, Epoxy- oder Cyanogruppen oder Halogenatomen substituierten $C_1$- bis $C_{18}$-Kohlenwasserstoffrest, der gegebenenfalls Ether-, Thioether-, Amin-, Ester-, Carbonyl-, Urethan-, Harnstoff-, Sulfonyl- oder Amidbindungen enthalten kann,

**R¹** und **R²** ein Wasserstoffatom, eine Hydroxygruppe, eine Halogengruppe oder einen einwertigen, gegebenenfalls mit Hydroxy-, $C_1$- bis $C_6$-Alkoxy-, Mercapto-, Epoxy- oder Cyanogruppen oder Halogenatomen substituierten $C_1$- bis $C_{18}$-Kohlenwasserstoff- oder -Kohlenwasserstoffoxyrest, der gegebenenfalls Ether-, Thioether-, Amin-, Ester-, Carbonyl-, Urethan-, Harnstoff-, Sulfonyl- oder Amidbindungen enthalten kann,

**R³** einen zweiwertigen, gegebenenfalls mit Hydroxy-, $C_1$- bis $C_6$-Alkoxy-, Mercapto-, Epoxy- oder Cyanogruppen oder Halogenatomen substituierten $C_1$- bis $C_{18}$-Kohlenwasserstoffrest, der gegebenenfalls Ether-, Thioether-, Amin-, Ester-, Carbonyl-, Urethan-, Harnstoff-, Sulfonyl- oder Amidbindungen enthalten kann und

**m** und **n** 0, 1, 2 oder 3 bedeuten.

Wenn **X** in vorstehender allgemeiner Formel 1 einen halben Rest **R³** bedeutet werden dadurch zwei Einheiten der allgemeinen Formel 1 über **R³** verbunden.

Wenn zwei Reste **X** in vorstehender allgemeiner Formel 1 jeweils einen halben Rest **R³** bedeuten, kann Ringschluß am Triazen erfolgen.

Beispiele für unsubstituierte Kohlenwasserstoffreste **R¹** und **R²** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentyl-rest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der α-Phenyl- und der β-Phenylethylrest und die entsprechenden Kohlenwasserstoffoxyreste.

Beispiele für substituierte Kohlenwasserstoffreste als Rest **R¹** und **R²** sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl-und N-(2-Aminoethyl)-3-amino-(2-methyl)propylrest; Aminoarylreste, wie der Aminophenylrest; Acyloxyalkylreste, wie der 3-Acryloxypropyl- und 3-Methacryloxypropylrest; Hydroxyalkylreste, wie der Hydroxypropylrest und Reste der Formeln

```
  O
 / \
CH2-CHCH2O(CH2)3-
```

und $HOCH_2CH(OH)CH_2SCH_2CH_2$- und die entsprechenden Kohlenwasserstoffoxyreste.

Weitere Beispiele für **R¹** und **R²**, insbesondere für **R²** sind substituierte aromatische Kohlenwasserstoffreste, wie der Nitrophenyl-, Cyanophenyl-, Methoxyphenyl-, Ethoxyphenyl-, Hydroxyphenyl-, Dimethoxyphenyl-, Halogenphenyl-, n-Butylphenyl-, Mercaptophenyl-, Carboxyphenyl-, Diethylaminophenyl-, Acetaminophenyl-, Tolyl-, Azobenzyl-Rest und Heteroaromatenreste wie der Pyridinyl-, Furyl-, Imidazolyl- und Thiophen-yl-Rest.
Bei dem Rest **$R^1$** handelt es sich besonders bevorzugt um ein Wasserstoffatom, um den Methyl-, Ethyl-, n-Propyl-, Vinyl-, 3-Norbornenyl-, n-5-Hexenyl-, Tolyl-, Phenyl-, Methoxy-, Ethoxy-, i-Propoxy-, n-Propoxyrest und insbesondere um den Methylrest.

Bei dem Rest **$R^2$** handelt es sich besonders bevorzugt um ein Wasserstoffatom, einen Methyl-, n-Butyl-, n-Cyclohexyl-, Phenyl-, Methoxyphenyl-, n-Butylphenyl-, Dimethoxyphenyl-, Tolyl-, Diethylaminophenyl-, Halogenphenyl, Hydroxyphenyl oder Cyanophenylrest.

Beispiele für zweiwertige Kohlenwasserstoffreste **R** und **$R^3$** sind gesättigte, verzweigte oder unverzweigte Alkylenreste wie der Methylen- und Ethylenrest, sowie n-Propylen-, Butylen-, Pentylen-, 1-Methylpentylen-, Hexylen-, Cyclohexylen- und Octadecylenreste oder ungesättigte Alkylen- oder Arylenreste, wie der Hexenylenrest, Phenylenreste, wie der 2-Chlor-1,4-phenylenrest, bzw. Reste wie $C_6H_4CH_2C_6H_4$, $C_6H_4$ - $C_6H_4$, $C_6H_4C(CH_3)_2C_6H_4$.

Beispiele für Substituenten an den zweiwertigen Kohlenwasserstoffresten **R** und **$R^3$** sind Halogenatome und $C_1$-$C_6$-Alkoxyreste. Weitere Beispiele für substituierte Reste **R** und **$R^3$** sind $-C_2F_4$, $C_3H_6NHC_2H_4$-, $C_3H_6OC_2H_4$-, $C_6H_4OC_6H_4$-, $C_6H_4SO_2C_6H_4$-, $C_6H_4SC_6H_4$-, $C_6H_4NHC_6H_4$-, $C_7H_6O$-, $C_6H_3Cl$-, $C_{12}H_8N_2$-, $C_7H_6S$-, und $C_6H_4COC_6H_4$-

Bei den Resten **R** und **$R^3$** handelt es sich besonders bevorzugt um $C_1$-$C_6$-Alkylenreste, die insbesondere nicht substituiert sind. n-Propylenreste sind besonders bevorzugt.

Bevorzugte Triazengruppen enthaltende Einheiten bzw. Kombinationen aus zwei Einheiten der allgemeinen Formel 1 weisen die allgemeinen Formeln 4 bis 12 auf,

$Y\text{-}N=N\text{-}NR^2\text{-}Y$ (4),

$Y\text{-}N=N\text{-}N(Y)_2$ (5),

$Y\text{-}N=N\text{-}N(R^2)_2$ (6),

$Y\text{-}N=N\text{-}NR^2\text{-}R^3\text{-}NR^2\text{-}N=N\text{-}Y$ (7),

$Y\text{-}NR^2\text{-}N=N\text{-}R^3\text{-}N=N\text{-}NR^2\text{-}Y$ (8),

$(Y)_2N\text{-}N=N\text{-}R^3\text{-}N=N\text{-}N(Y)_2$ (9),

$(Y)_2N\text{-}N=NR^2$ (10),

$Y\text{-}NR^2\text{-}N=NR^2$ (11),

$Y\text{-}N=N\text{-}N(Y)\text{-}R\text{-}N(Y)\text{-}N=N\text{-}Y$ (12),

wobei
**Y** einen Rest der allgemeinen Formel 2 bedeutet und
**R, $R^2$** und **$R^3$** die vorstehenden Bedeutungen aufweisen.

Besonders bevorzugte Triazengruppen enthaltende Einheiten weisen die allgemeinen Formeln 8 und 11, insbesondere 11 auf.

Wenn die erfindungsgemäßen Organosiliciumverbindungen Einheiten der allgemeinen Formel 3 aufweisen, enthalten die Organosiliciumverbindungen Siloxanbestandteile, die beispielsweise linear, cyclisch, verzweigt, elastomer oder harzartig vernetzt sein können, um beispielsweise mit entsprechenden Siloxanmassen oder anderen Massen mischbar oder verträglich zu sein.

Die erfindungsgemäßen Organosiliciumverbindungen können in fester oder flüssiger Form vorliegen. Sie können beliebige, bei Organosiliciumverbindungen bekannte Strukturen aufweisen. Beispielsweise kann der Organosiliciumanteil durch Triazeneinheiten unterbrochen sein oder die Triazeneinheiten sind als Seitengruppen in den Organosiliciumverbindungen angebunden. Der Organosiliciumanteil kann linear, verzweigt oder harzartig vernetzt sein.

Wenn die Organosiliciumverbindungen keine Einheiten der allgemeinen Formel 3 aufweisen, liegen Silane vor. Wenn die Organosiliciumverbindung Einheiten der allgemeinen Formel 3 aufweisen, liegen Siloxane vor.

Bevorzugte Beispiele für erfindungsgemäße Organosiliciumverbindungen sind lineare Diorganopolysiloxane, die in den Einheiten der allgemeinen Formel 3 als Reste **$R^1$** in der Kette ausschließlich Wasserstoff-,

Methyl-, Phenyl- oder 3,3,3-Trifluorpropylreste enthalten und als seitenständige Gruppen Triazeneinheiten der allgemeinen Formel 1.

Der Anteil der Einheiten der allgemeinen Formel 3 in den erfindungsgemäßen Organosiliciumverbindungen kann sehr hoch, sein, beispielsweise wenn die erfindungsgemäßen Organosiliciumverbindungen als Pfropfgrundlage für Copolymere eingesetzt werden. Es können beispielsweise bis zu 1000, vorzugsweise 5-50 Einheiten der allgemeinen Formel 3 pro Einheit der allgemeinen Formel 1 vorhanden sein.

Gegenstand der Erfindung sind auch Verfahren zur Herstellung von Organosiliciumverbindungen die mindestens einen Si-C gebundenen organischen Rest aufweisen, welcher mindestens eine Triazengruppe enthält.

Verfahren 1)

Bei diesem Verfahren werden Diazoniumsalze mit primären oder sekundären Aminen umgesetzt, wobei mindestens einer der Reste an den Diazoniumsalzen oder Aminen einen Si-C gebundenen Organosiliciumrest aufweist.

Bevorzugt ist ein Verfahren zur Herstellung von Organosiliciumverbindungen welche aus mindestens einer eine Triazengruppe enthaltenden Einheit der vorstehenden allgemeinen Formel 1 aufgebaut sind, in dem Diazoniumsalze der allgemeinen Formel 13

$$X\text{-}N=N^{+}\ Z^{-} \qquad (13)$$

mit Aminen der allgemeinen Formel 14

$$\begin{array}{ccccc} H & - & N & - & X \\ & & | & & \\ & & X & & \end{array} \qquad (14)$$

umgesetzt werden, wobei

**X** die vorstehend in der allgemeinen Formel 2 angegebenen Bedeutungen aufweist und

**Z** ein an sich bekannter Anionrest ist.

Verfahren 1 wird vorzugsweise in Wasser, Alkoholen, wie Methanol, Ethanol oder Isopropanol oder in den nachstehend bei Verfahren 3 angegebenen organischen Lösungsmitteln durchgeführt.

Bevorzugte Beispiele für Anionen **Z** sind Cl, Br, F, $PF_6$, $BF_4$, $SbF_6$, $CH_3C_6H_4SO_3$, $CH_3COO$, $CF_3COO$, $CF_3SO_3$.

Verfahren 2)

Bei diesem Verfahren werden

A) Triazenverbindungen, welche Reste tragen, die Epoxid-, Carbonsäureanhydridgruppen, Halogenatome, Gruppen -COCl, oder -NCO aufweisen, mit Gruppen -OH, $-NHR^1$, COOH oder -SH aufweisenden Organosiliciumverbindungen umgesetzt oder

B) Triazenverbindungen, welche Reste tragen, die Gruppen, wie -COOH, -OH, $-NHR^1$, oder -SH aufweisen, mit Epoxid-, Carbonsäureanhydridgruppen, Halogenatomen, Gruppen -COCl, oder -NCO aufweisenden Organosiliciumverbindungen umgesetzt.

$\mathbf{R^1}$ weist die vorstehenden Bedeutungen auf.

Bevorzugt ist A) ein Verfahren zur Herstellung von Organosiliciumverbindungen, welche aus mindestens einer eine Triazengruppe enthaltenden Einheit der vorstehenden allgemeinen Formel 1 aufgebaut sind, wobei Verbindungen der allgemeinen Formel 15

$$\begin{array}{ccccccc} B-N=N & - & N & - & B \\ & & | & & \\ & & B & & \end{array} \qquad (15),$$

in der

**B** einen einwertigen, eine Carbonsäureanhydrid-, Epoxidgruppe, eine Gruppe -COCl, oder -NCO

aufweisenden, gegebenenfalls mit Hydroxy-, $C_1$- bis $C_6$-Alkoxy-, Mercapto-, Epoxy- oder Cyanogruppen oder Halogenatomen substituierten $C_1$- bis $C_{17}$-Kohlenwasserstoffrest, der gegebenenfalls Ether-, Thioether-, Amin-, Ester-, Carbonyl-, Urethan-, Harnstoff-, Sulfonyl- oder Amidbindungen enthalten kann,
einen Rest der allgemeinen Formel 2, einen Rest **R²** oder einen halben zweiwertigen Rest **R³** bedeuten,
mit der Maßgabe, daß mindestens ein **B** pro Verbindung der allgemeinen Formel 15 einen vorstehend bezeichneten einwertigen, eine Carbonsäureanhydrid-, Epoxidgruppe eine Gruppe -COCl, oder -NCO aufweisenden Rest bedeutet,

mit Verbindungen der allgemeinen Formel 16

A-G (16),

in der

- **A** Gruppen -OH, -NHR¹, -COOH oder -SH,
- **G** einen Rest der allgemeinen Formel 2 bedeuten und
- **R²** und **R³** die vorstehenden Bedeutungen aufweisen,

umgesetzt werden.

Ebenfalls bevorzugt ist B) ein entsprechendes Verfahren zur Herstellung von Organosiliciumverbindungen welche aus mindestens einer eine Triazengruppe enthaltenden Einheit der vorstehenden allgemeinen Formel 1 aufgebaut sind, wobei in der allgemeinen Formel 15 **B** die Gruppen -OH, -NHR¹, -COOH oder -SH aufweisen können und in der allgemeinen Formel 16 **A** Halogenatome, Carbonsäureanhydrid-, Epoxidgruppen oder die Gruppen -COCl, oder -NCO bedeuten.

Verfahren 2 wird vorzugsweise in den nachstehend bei Verfahren 3 angegebenen organischen Lösungsmitteln durchgeführt.

Verfahren 3)

Bei diesem Verfahren werden Triazenverbindungen, welche Reste tragen, die olefinische Doppelbindungen oder acetylenische Dreifachbindungen aufweisen, mit Si-H Gruppen aufweisenden Organosiliciumverbindungen in Gegenwart von Platin, Rhodium oder deren Verbindungen umgesetzt.

Bevorzugt ist ein Verfahren zur Herstellung von Organosiliciumverbindungen welche aus mindestens einer eine Triazengruppe enthaltenden Einheit der vorstehenden allgemeinen Formel 1 aufgebaut sind, wobei Verbindungen der allgemeinen Formel 17

$$Z-N=N-\underset{\displaystyle Z}{\underset{|}{N}}-Z \qquad (17),$$

in der

**Z** einen einwertigen, eine olefinische Doppelbindung oder acetylenische Dreifachbindung aufweisenden, gegebenenfalls mit Hydroxy-, $C_1$- bis $C_6$-Alkoxy-, Mercapto-, Epoxy- oder Cyanogruppen oder Halogenatomen substituierten $C_1$- bis $C_{18}$-Kohlenwasserstoffrest, der gegebenenfalls Ether-, Thioether-, Amin-, Ester-, Carbonyl-, Urethan-, Harnstoff-, Sulfonyl- oder Amidbindungen enthalten kann,
einen Rest der allgemeinen Formel 2, einen Rest **R²** oder einen halben zweiwertigen Rest **R³** bedeuten, mit der Maßgabe, daß mindestens ein **Z** pro Verbindung der allgemeinen Formel 17 einen vorstehend bezeichneten einwertigen, eine olefinische Doppelbindung oder acetylenische Dreifachbindung aufweisenden Rest bedeutet,

mit Verbindungen der allgemeinen Formel 18

$$H-SiR^1_oO_{\frac{3-o}{2}} \qquad (18),$$

in der

**o** 0, 1, 2 oder 3 bedeuten,

**$R^1$** und **$R^2$** die vorstehenden Bedeutungen aufweisen,

in Gegenwart von Platin, Rhodium oder deren Verbindungen umgesetzt werden.

Für die vorstehende Umsetzung können alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z. B. $PtCl_4$, $H_2PtCl_6{*}6H_2O$, $Na_2PtCl_4{*}4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6{*}6H_2O$ und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe.

Katalysator wird vorzugsweise in Mengen von 0,5 bis 500 Gewichts-ppm (Gewichtsteilen je Million Gewichtsteilen), insbesondere 2 bis 400 Gewichts-ppm, jeweils berechnet als elementares Metall und bezogen auf das Gesamtgewicht der in der Reaktionsmischung vorliegenden, direkt an Siliciumatome gebundene Wasserstoffatome aufweisenden Silanen und/oder Siloxanen, eingesetzt.

Die genannte Umsetzung (nachfolgend Hydrosilylierung genannt) kann in Abwesenheit oder in Anwesenheit von Lösungsmittel erfolgen, wobei die Anwesenheit von Lösungsmittel bevorzugt ist.
Falls Lösungsmittel verwendet werden, sind Lösungsmittel oder Lösungsmittelgemische, welche unter den Reaktionsbedingungen weitgehend inert sind und insbesondere solche mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methyl-isobutylketon; Schwefelkohlenstoff und Nitrobenzol, Dimethylacetamid, Dimethylformamid, Dimethylsulfoxid, N-Methylpyrrolidon oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden . Die Reaktion kann auch in einem Lösungsmittelgemisch mit einer Mischungslücke ausgeführt werden, wobei in jeder der Mischphasen jeweils mindestens ein Reaktionspartner löslich ist.

Die Hydrosilylierung kann beim Druck der umgebenden Atmosphäre, also etwa 0,1 MPa (abs.), sie kann auch bei höheren oder bei niedrigeren Drücken durchgeführt werden. Bevorzugt sind Drücke von 0,01 MPa (abs.) bis 1,0 MPa (abs.), insbesondere von 0,09 MPa (abs.) bis 0,11 MPa (abs.).

Verfahren 4)

Die erfindungsgemäßen Silane, welche kondensationsfähige Gruppen enthalten, können durch Umsetzung mit kondensationsfähige Gruppen enthaltenden Silanen oder Siloxanen zu den erfindungsgemäßen Organosiloxanen hydrolysiert, kondensiert oder equilibriert werden .

Bei dem bevorzugten Verfahren zur Herstellung von Organosiloxanen, die mindestens eine Triazengruppe enthaltenden Einheit der allgemeinen Formel 1 und Einheiten der allgemeinen Formel 3 aufweisen, werden Triazengruppen enthaltende Einheiten der allgemeinen Formel 1, in der **X** einen Rest der allgemeinen Formel 2 bedeutet, in der mindestens ein Rest **$R^1$** einen Halogen-, Hydroxy- oder $C_1$- bis $C_6$-Alkoxyrest bedeutet, mit Organosiliciumverbindungen aus Einheiten der allgemeinen Formel 19

$$SiR^1_pO_{\frac{4-p}{2}} \qquad (19),$$

in der

**p** 0, 1, 2, 3 oder 4 bedeutet, und

**$R^1$** die in der allgemeinen Formel 2 angegebenen Bedeutungen aufweist, mit der Maßgabe, daß in der allgemeinen Formel 19 mindestens ein Rest **$R^1$** einen $C_1$- bis $C_6$- Alkoxyrest, Halogenatom oder eine Hydroxygruppe bedeutet,

umgesetzt.

Das vorstehende Verfahren wird vorzugsweise in Gegenwart eines an sich bekannten Katalysators durchgeführt.

Beispiele für solche Katalysatoren sind insbesondere Schwefelsäure, Phosphorsäure, Trifluormethansulfonsäure, Eisen(II)-chlorid, Aluminiumchlorid, Bortrifluorid, Zinkchlorid, Kaolin, saure Zeolithe, sulfonierte Kohle, Alkalihydroxide, vorzugsweise Kalium- und Cäsiumhydroxid, Alkalialkoholate, quaternäre Ammoniumhydroxide, wie Tetramethylammoniumhydroxid, Benzyltrimethylammoniumhydroxid, Benzyltriethylammoniumhydroxid, Benzyltrimethylammoniumbutylat, $\beta$-Hydroxyethyltrimethylammonium-2-ethylhexoat, quaternäre Phosphoniumhydroxide, wie Tetra-n-butylphosphoniumhydroxid und Tri-n-butyl-3-[tris(trimethylsiloxy)-silyl]-n-propylphosphoniumhydroxid, Alkalisiloxanolate und Ammoniumorganosiloxanolate, wie Benzyltrimethylammoniumethylsiloxanolat, und Phosphor-Stickstoff-Verbindungen, wie Phosphornitrilchlorid eingesetzt.

Vorzugsweise wird der Katalysator in Mengen von 0,1 bis 10 Gew.-%, bezogen auf die Summe aus Triazengruppen enthaltenden Einheiten der allgemeinen Formel 1 und Organosiliciumverbindungen aus Einheiten der allgemeinen Formel 19 eingesetzt.

Vorzugsweise werden die vorstehenden Herstellungsverfahren 1 bis 4 bei Temperaturen von -10 °C bis 150 °C, insbesondere von 0 °C bis 100 °C durchgeführt. Vorzugsweise werden die vorstehenden Herstellungsverfahren unter Lichtausschluß durchgeführt. Vorzugsweise werden bei den vorstehenden Herstellungsverfahren alle flüchtigen Anteile und Salze nach der Synthese entfernt.

Die erfindungsgemäßen Organosiliciumverbindungen werden vorzugsweise als Radikalinitiatoren für die Homo-, Pfropfcopolymerisation und Blockcopolymerisation von radikalisch polymerisierbaren organischen Verbindungen eingesetzt.

Ein weiterer Gegenstand der Erfindung ist ein Verfahren zur Herstellung von Pfropfcopolymerisaten und Blockcopolymerisaten, bei dem die erfindungsgemäßen Organosiliciumverbindungen mit radikalisch polymerisierbaren organischen Verbindungen umgesetzt werden.

Das erfindungsgemäße Verfahren zur Herstellung von Homo- und Copolymerisaten kann in Substanz oder in Gegenwart organischer Lösungsmittel durchgeführt werden, wobei die erfindungsgemäßen Organosiliciumverbindungen teilweise oder vollständig gelöst sein können. Vorzugsweise wird in Lösung gearbeitet. Vorzugsweise werden als Lösungsmittel Ether, wie Tetrahydrofuran und Dioxan oder Kohlenwasserstoffe, wie Toluol und Xylol eingesetzt. Organische Lösungsmittel werden vorzugsweise in der 0- bis 20-fachen Gewichtsmenge, insbesondere in der 1- bis 10-fachen Menge der erfindungsgemäßen Organosiliciumverbindungen eingesetzt.

Die erfindungsgemäßen Organosiliciumverbindungen werden vorzugsweise gegebenenfalls zusammen mit Lösungsmittel vorgelegt. Alle Komponenten des Verfahrens können aber auch vermischt werden, bevor der Initiator aktiviert wird.

Die Umsetzung findet vorzugsweise unter Ausschluß von Sauerstoff statt. Die Reaktionsmischung wird vorzugsweise 10 bis 90 Minuten mit Stickstoff gesättigt, der pH-Wert sollte vorzugsweise 7 - 9 betragen, bevor der Radikalinitiator aktiviert wird. Vorzugsweise werden radikalisch polymerisierbare organische Verbindungen in einer Menge zudosiert, die 1 - 95 Gew.-%, insbesondere 20 - 80 Gew.-%, bezogen auf das Gesamtgewicht des Homo- oder Copolymerisats, beträgt.

Vorzugsweise werden als radikalisch polymerisierbare organische Verbindungen monomere olefinisch ungesättigte organische Verbindungen eingesetzt. Vorzugsweise werden Acrylsäure, Methacrylsäure, Acrylsäureester oder Methacrylsäureester von aliphatischen Alkoholen und Diolen mit 1 - 10 C-Atomen, Acrylnitril, Acrylamid, Styrol, p-Methylstyrol, Vinylacetat, Vinylpropionat, Maleinimid, Vinylpyrrolidon, Vinylchlorid, Ethylen, Butadien, Isopren und 2-Chlor-1,4-butadien eingesetzt. Besonders bevorzugt sind Styrol, Acrylamid, Butadien, Isopren sowie Acrylsäureester und Methacrylsäureester von aliphatischen Alkoholen mit 1 - 4 C-Atomen, beispielsweise Methyl(meth)acrylat, Ethyl(meth)acrylat oder Butyl(meth)acrylat und Ethylenglykoldi(meth)acrylat. Als organischer Polymeranteil sind sowohl Homopolymerisate als auch Mischpolymerisate der genannten Monomere geeignet. Die Pfropfpolymerisation mit Monomeren, welche zwei ethylenische Doppelbindungen enthalten führt zu vernetzten Pfropfpolymerisaten.

Die Pfropfung auf die Organopolysiloxan-Radikalmakroinitiatoren wird vorzugsweise durch Temperaturerhöhung auf über 40 - 150 °C, bevorzugt 60 - 120 °C, gestartet. Zur vollständigen Polymerisation wird die Starttemperatur für 30 Minuten bis 24 Stunden beibehalten. Die Pfropfung kann auch durch UV-Bestrahlung mit einer Quecksilber- oder Quecksilber/Xenon-Lampe bis zu 24 Stunden erfolgen.

Die Isolierung der erfindungsgemäßen Homo-, Pfropfco- oder Blockcopolymerisate aus der Lösung, sowie die Entfernung von Restmengen an nichtumgesetztem Organomonomer erfolgt durch Fällung oder

durch andere bekannte Aufreinigungsmethoden.

Bei den erfindungsgemäßen Homo-, Pfropfco- oder Blockcopolymerisaten handelt es sich um gelbliche Öle oder Feststoffe. Die nach dem erfindungsgemäßen Verfahren hergestellten Homo-, Pfropfco- oder Blockcopolymerisate weisen einen definierten Aufbau durch gezielte Anbindung der Organopolymerketten an die Siliciumgrundlage auf.

Ein weiterer Gegenstand der Erfindung sind die nach dem erfindungsgemäßen Verfahren erhältlichen Homo-, Pfropfco- und Block-copolymerisate.

Die mittleren Molmassen der erfindungsgemäßen Homo-, Pfropfcopolymerisate und Blockcopolymerisate liegen bevorzugt bei $10^3$ bis $10^7$ g/Mol, insbesondere $5 \cdot 10^3$ bis $5 \cdot 10^5$ g/Mol.

Die erfindungsgemäßen Homo-, Pfropfcopolymerisate und Blockcopolymerisate eignen sich vor allem zur Anwendung als modifizierte Thermoplaste und zur Verwendung als Additive zur Polymermodifizierung, insbesondere als Verträglichkeitsvermittler für siliciumhaltige Polymerblends oder als Siliconbestandteil in Polymeren oder Polymerblends.

Ein weiterer Gegenstand der Erfindung ist ein Verfahren zur Vernetzung von Organosiliciumverbindungen oder von radikalisch polymerisierbaren organischen Verbindungen bei dem die organischen Verbindungen mit den erfindungsgemäßen Organosiliciumverbindungen vermischt und die Mischung erwärmt oder mit UV-Licht bestrahlt wird.

Vorzugsweise werden die erfindungsgemäßen Organosiliciumverbindungen, die als Radikalinitiatoren dienen, in Substanz thermolysiert oder photolysiert.

Die Mischung wird vorzugsweise auf über 40 - 200 °C, bevorzugt 60 - 170 °C, erwärmt.

Durch die Generation und/oder Kombination der entstehenden Radikale werden die Organosilicium- und organischen Verbindungen vernetzt. Es können sowohl Monomere als auch Polymere vernetzt werden.

Vorzugsweise werden Siliconsysteme, die insbesondere olefinische Doppelbindungen aufweisen vernetzt. Zum anderen besteht die Möglichkeit polyfunktionelle ungesättigte Systeme, wie Bisacrylate und Polybutadien mit den erfindungsgemäßen Organosiliciumverbindungen als Radikalinitiatoren zu vernetzen, wobei auch Blends entstehen können.

Die erfindungsgemäßen Organosiliciumverbindungen können weiterhin Verwendung als Treibmittel und Farbstoff finden. In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 20 ° C.

Die nachstehenden Abkürzungen wurden verwendet:

| | |
|---|---|
| d.Th. | = der Theorie |
| p.A. | = zur Analyse |
| THF | = Tetrahydrofuran |
| GPC | = Gelpermeationschromatographie |

Beispiele

Allgemeine Herstellung der Diazoniumsalze im wässrigen System

0,25 mol des entsprechenden Anilin-Derivates wurden in 200 ml 10 %iger wässriger Salzsäure gelöst, dann mit 1 g Aktivkohle 5 Minuten gerührt, und filtriert. Das Filtrat wurde bei 0 °C unter Lichtausschluß mit einer Lösung von 17,25 g (0,25 mol) Natriumnitrit in 30 g Wasser versetzt. Nach 1 Stunde wurden bei 0 °C 54,55 g (0,5 mol) Natriumtetrafluoroborat zugefügt und die entstandene Suspension 30 Minuten gerührt. Bei Bisanilinderivaten wurden jeweils die doppelten Mengen an wässriger Salzsäure, Natriumnitrit, Natriumtetrafluoroborat und Wasser eingesetzt.

Die Produkte wurden abgefiltert, dreimal mit Eiswasser nachgewaschen und dann im Hochvakuum bis zur Gewichtskonstanz getrocknet. Es wurden die Diazoniumsalze mit Ausbeuten zwischen 60 % und 80 % der Theorie als weiße bis hellgelbe Feststoffe erhalten.

Die Diazoniumsalze wurden ohne weitere Lagerung anschließend für die Triazensynthesen eingesetzt.

Alle Arbeiten wurden unter absolutem Lichtausschluß durchgeführt.

**Beispiel 1**: Synthese von Radikalmakroinitiator RM 1

40 g ($2{,}6 \times 10^{-2}$ mol NHR-Funktion, R = Cyclohexyl, Viskosität = 836 $mm^2/s$) eines seitenständig N-Cyclohexylaminopropylfunktionalisierten Polydimethylsiloxans wurden in 70 ml abs. THF und 2,69 g ($2{,}6 \times 10^{-2}$ mol) Triethylamin gelöst und auf 0 °C abgekühlt. Dazu wurden langsam und portionsweise insgesamt

6,6 g (3 x $10^{-2}$ mol) 4-Methoxybenzoldiazoniumtetrafluoroborat gegeben. Die Lösung wurde noch 1 Stunde bei 0 °C gerührt. Feste Bestandteile wurden abfiltriert. Nach Zusatz von 50 ml Diethylether wurde der Ansatz mit je 2x 100 ml Wasser gewaschen, die organische Phase über Magnesiumsulfat getrocknet und das Lösungsmittel im Vakuum entfernt. Das ölige, rote Produkt wurde im Hochvakuum bis zur Gewichtskonstanz getrocknet.
Ausbeute: 35 g (76 % d. Th.)

**Beispiel 2**: Synthese von Radikalmakroinitiator RM 2

30 g (7,6 x $10^{-3}$ mol NHR-Funktion, R = Cyclohexyl, Viskosität = 816 $mm^2/s$) eines N-Cyclohexylaminopropylfunktionalisierten Polydimethylsiloxans wurden in 60 ml abs. THF und 0,77 g (7,6 x $10^{-3}$ mol) Triethylamin gelöst und auf 0 °C abgekühlt. Dazu wurden langsam und portionsweise insgesamt 1,7 g (7,6 x $10^{-3}$ mol) 4-Methoxybenzoldiazoniumtetrafluoroborat gegeben. Die Lösung wurde noch 1 Stunde bei 0 °C gerührt.

Feste Bestandteile wurden abfiltriert. Nach Zusatz von 50 ml Diethylether wurde der Ansatz mit je 2 x 100 ml Wasser gewaschen, die organische Phase über Magnesiumsulfat getrocknet und das Lösungsmittel im Vakuum entfernt. Das ölige, rote Produkt wurde im Hochvakuum bis zur Gewichtskonstanz getrocknet.
Ausbeute: 26 g (83 % d. Th.)

**Beispiel 3:** Synthese von Radikalmakroinitiator RM 3

30 g (5,3 x $10^{-2}$ mol NHR-Funktion, R = Cyclohexyl, Viskosität = 826 $mm^2/s$) eines N- Cyclohexylaminopropylfunktionalisierten Polydimethylsiloxans wurden in 60 ml abs. THF und 5,42 g (5,3 x $10^{-2}$ mol) Triethylamin gelöst und auf 0 °C abgekühlt. Dazu wurden langsam und portionsweise insgesamt 11,7 g (5,3 x $10^{-2}$ mol) 4-Methoxybenzoldiazoniumtetrafluoroborat gegeben. Die Lösung wurde noch 1 Stunde bei 0 °C gerührt. Feste Bestandteile wurden abfiltriert. Nach Zusatz von 50 ml Diethylether wurde der Ansatz mit je 2 x 100 ml Wasser gewaschen, die organische Phase über Magnesiumsulfat getrocknet und das Lösungsmittel im Vakuum entfernt. Das ölige, rote Produkt wurde im Hochvakuum bis zur Gewichtskonstanz getrocknet.
Ausbeute: 33 g (80 % d. Th.)

**Beispiel 4:** Synthese von Radikalmakroinitiator RM 4

16,4 g (9,7 x $10^{-3}$ mol NHR-Funktion, R = Cyclohexyl, Viskosität = 738 $mm^2/s$) eines N-Cyclohexylaminopropyl-funktionalisierten Polydimethylsiloxans wurden in 50 ml Isopropanol gelöst. Dazu wurden langsam und portionsweise insgesamt 7,3 g (3,8 x $10^{-2}$ mol) Benzoldiazoniumtetrafluoroborat gegeben. Man pufferte die Lösung mit Natriumhydrogencarbonat bis ins leicht Alkalische (pH = 8) und rührte 2 Stunden bei 40 °C. Dann wurde das Lösungsmittel im Hochvakuum bei 30 °C entfernt, der Rückstand in Diethylether aufgenommen und im Scheidetrichter zweimal mit je 25 ml Wasser ausgeschüttelt. Die Etherphase wurde mit Natriumsulfat getrocknet und der Ether evaporiert. Das orangerote, hochviskose Öl wurde im Hochvakuum bis zur Gewichtskonstanz getrocknet.
Ausbeute: 13,2 g (75,8 % d. Th.)

**Beispiel 5:** Synthese von Radikalmakroinitiator RM 5

44,3 g (1,95 x $10^{-2}$ mol $NH_2$-Funktion, Viskosität 836 $mm^2/s$) eines Aminopropyl-funktionalisierten Polydimethylsiloxanes wurden in 150 ml THF und 7,7 g (7,6 x $10^{-2}$ mol) Triethylamin gelöst und auf 0 °C abgekühlt. Dazu wurden langsam und portionsweise insgesamt 4,23 g (1,95 x $10^{-2}$ mol) 4-Cyanobenzoldiazoniumtetrafluoroborat gegeben. Die Lösung wurde noch 1 Stunde bei 0 °C gerührt. Danach wurde die Lösung im Scheidetrichter mit 100 ml Diethylether versetzt und dreimal mit je 100 ml 0,01 molarer wässriger Salzsäure ausgeschüttelt. Anschließend trocknete man die organische Phase mit Natriumsulfat und evaporierte das Lösungsmittel. Das rotbraune, ölige Produkt wurde im Hochvakuum bis zur Gewichtskonstanz getrocknet.
Ausbeute: 36,1 g (77 % d. Th.)

**Beispiel 6:** Synthese von Radikalmakroinitiator RM 6

Zu einer auf - 10 °C abgekühlten Lösung von 0,58 g (1,3 x $10^{-3}$ mol) 4,4'-Bisdiazoniumdiphenylsulfon-tetrafluoroborat in 30 ml Dimethylacetamid gab man unter ständigem Rühren eine gesättigte Lösung von 0,28 g (2,6 x $10^{-3}$ mol) Natriumcarbonat in Wasser und eine vorgekühlte Lösung von 7,38 g (1,3 x $10^{-3}$ mol NHR-Funktion, R = Cyclohexyl) eines $\alpha,\omega$-Cyclohexylaminopropylfunktionalisierten Polydimethylsiloxans der Kettenlänge 70 in THF. Nachdem die Gasentwicklung abgeklungen war, wurde 30 min bei 0 °C gerührt. Die Reaktionsmischung wurde in einem Scheidetrichter mit 200 ml Wasser und 50 ml Diethylether versetzt. Es wurde mehrfach mit Wasser gewaschen, die organische Phase wurde über Natriumsulfat getrocknet, das Lösungsmittel im Vakuum entfernt und das Produkt im Hochvakuum bis zur Gewichtskonstanz getrocknet. Man erhielt ein rotes, viskoses Öl.
Ausbeute: 3,5 g (44 % d. Th.)

**Beispiel 7**: Synthese von Radikalmakroinitiator RM 7

500 g Wasser, 6 g Dodigen $^{R}$ 226 (Fa. Hoechst AG; Cocosalkyldimethylbenzylammoniumchlorid, 50 %ig in Wasser) und 0,5 g Natriumhydroxidlösung (10 %ig in Wasser) wurden vorgelegt und bei 65 °C unter Rühren im Verlauf von 3 Stunden mit einer Mischung aus 95,6 g (0.7 mol) Methyltrimethoxysilan und 4,4 g (0.02 mol) Aminopropyltriethoxysilan versetzt. Nach weiteren 2 Stunden Rühren erhielt man eine stabile, klare, leicht opaleszierende Dispersion mit einem Festgehalt von 7 % und einem pH-Wert von 10.

50 g (1,35 x $10^{-3}$ mol an $NH_2$-Funktion) der Dispersion wurden bei Raumtemperatur vorgelegt und mit 0,29 g (1,35 x $10^{-3}$ mol) 4-Cyanobenzoldiazoniumtetrafluoroborat und 0.45 g (4,4 x $10^{-3}$ mol) Triethylamin versetzt. Die Dispersion wurde anschließend 2 Stunden bei Raumtemperatur gerührt und der orangegelbe Feststoff abfiltriert. Das Produkt wurde alternierend mit Wasser und Methanol gewaschen bis das Filtrat farblos war. Die Trocknung des orangegelben, feinen Feststoffes erfolgte im Hochvakuum bei Raumtemperatur bis zur Gewichtskonstanz.
Ausbeute: 2,9 g (78 % d. Th.)

**Beispiel 8:** Synthese von Radikalmakroinitiator RM 8

1,55 g (0.013 mol) 3-Aminostyrol wurden in 30 ml zweimolarer wässriger Salzsäure gelöst, mit 40 ml Wasser versetzt und bei 0 °C mit 0.897 g (0,013 mol) Natriumnitrit in wenig Wasser diazotiert. Die Diazoniumsalzlösung gab man unter Rühren zu einer auf 0 °C gekühlten Lösung von 25 g Natriumacetat und 0.95 g (0,013 mol) Diethylamin in Wasser. Die Reaktionsmischung wurde im Scheidetrichter mit 50 ml Ether versetzt und mehrmals mit 50 ml Wasser gewaschen. Die organische Phase wurde über Natriumsulfat getrocknet und im Vakuum eingeengt. Das Produkt wurde an Silicagel (Laufmittel Pentan/Ether 3 : 1) gereinigt.
Ausbeute: 1,05 g (40 % d. Th.)
10,2 g 3-Vinylphenyldiethyltriazen wurden zusammen mit 40 g eines Mischpolymerisates aus Trimethylsiloxan-, Dimethylsiloxan- und Methylsiloxaneinheiten mit einer Viskosität von 238 $mm^2/s$ bei 25 °C, das 0,025 Gew.- % Si- gebundenen Wasserstoff enthielt und 12,35 mg eines 1,3-Divinyl-1,1,3,3-tetramethyldisiloxankomplexes von Platin mit einem Platin-Gehalt von 17 Gewichtsprozent unter Rühren und Schutzgas auf 80 °C aufgeheizt. Anschließend wurden weitere 160 g des o. g. Mischpolymerisats im Verlauf von 1 Stunde zudosiert. Nach 1 Stunde Reaktionszeit bei einer Temperatur von 80 °C wurden erneut 6,1 mg des o. g. Platinkatalysators zugesetzt und eine weitere Stunde bei 50 °C nachreagiert. Das rote Öl wurde im Hochvakuum bei 50 °C ausgeheizt.
Ausbeute: 195 g (93% d. Th.)

**Beispiel 9**: Synthese von Radikalinitiator RM 9

12,3 g (0,05 mol) N-Cyclohexylamino-propyl-dimethoxymethylsilan und 13 g (0,11 mol) Trimethylethoxysilan wurden vorgelegt. Unter ständigem Rühren tropfte man eine Lösung von 22 mg (5,5 x $10^{-4}$ mol) Natriumhydroxid in 4 ml Wasser zu. Die entstandene Emulsion wurde 1 Stunde bei 60 °C temperiert, wobei eine klare Lösung entstand. Alle leichtflüchtigen Verbindungen wurden unter Normaldurck bei 100 °C abdestilliert. Der Rückstand wurde mit 6 ml 20 %-iger wäßriger Salzsäure 4 Stunden unter Rückfluß erhitzt, die nicht wässrige Phase abgetrennt, zweimal mit Wasser gewaschen und bei 1 mbar destilliert (Siedepunkt 120 - 121 °C).
Ausbeute: 5,53 g (31 % d. Th.)

Zu 3 g (8,3 x $10^{-3}$ mol) des oben dargestellten Bis[trimethylsiloxy]-N-cyclohexylamino-propyl- methylsilanes, gelöst in 20 ml THF und auf 0 °C gekühlt, wurden 3,68 g (16,6 x $10^{-3}$ mol) p-Methoxybenzoldiazoniumtetrafluoroborat und 1,7 g (16,6 x $10^{-3}$ mol) Triethylamin, gelöst in THF, zugetropft. Die Reaktionsmischung wurde 1 Stunde bei 0 °C gerührt. Feste Bestandteile wurden abfiltriert, der Ansatz wurde mit 50 ml Diethylether versetzt und mit zweimal je 100 ml Wasser gewaschen. Die organische Phase wurde über Natriumsulfat getrocknet und das Lösungsmittel im Vakuum abgezogen. Das Produkt wurde im Hochvakuum getrocknet. Man erhielt ein rotes Öl.
Ausbeute: 4 g (60 % d. Th.)
2,4 g (0,005 mol) des roten Öls wurden mit 26 g eines ungestopperten Polydimethylsiloxanes der Viskosität 100 $mm^2/s$ bei Raumtemperatur und 0,142 g (0,55 mmol) Tetrabutylammoniumhydroxid im 50 ml Toluol vorgelegt. Die Lösung wurde auf 80 °C temperiert und 4 Stunden gerührt. Danach wurde das Lösungsmittel im Vakuum evaporiert und das rötliche Öl im Hochvakuum bei 50 °C bis zur Gewichtskonstanz ausgeheizt.
Ausbeute: 25,9 g (91,2% d. Th.)

**Beispiel 10**: Synthese von Copolymerisat Copo 1

3,75 g RM 1, wie in Beispiel 1 beschrieben, wurden in 50 ml Toluol gelöst und mit 11,25 g (0,113 mol) Methylmethacrylat versetzt. Die Lösung wurde entgast und 16 Stunden bei 95 °C unter Stickstoffatmosphäre erhitzt. Das Reaktionsgemisch wurde in 600 ml Methanol und 300 ml Wasser eingetropft. Das ausgefallene Produkt wurde durch Filtration abgetrennt, nochmals in THF gelöst, in Wasser gefällt, abgetrennt und getrocknet. Man erhielt ein leicht gelbes, flockiges Pulver.
Ausbeute: 7,6 g (51 % d. Th.)
Molmasse (GPC, THF als Eluent): Mn = 53300, Mw = 116200 g/mol

**Beispiel 11**: Synthese von Copolymerisat Copo 2

1,0 g RM2, wie in Beispiel 2 beschrieben, wurden in 50 ml Toluol gelöst und mit 5,0 g (0,05 mol) Methylmethacrylat versetzt. Die Lösung wurde entgast und 16 Stunden bei 95 °C unter Stickstoffatmosphäre erhitzt. Das Reaktionsgemisch wurde in 400 ml Methanol und 200 ml Wasser eingetropft. Das ausgefallene Produkt wurde durch Filtration abgetrennt, nochmals in THF gelöst, in Wasser gefällt, abgetrennt und getrocknet . Man erhielt ein leicht gelbes, flockiges Pulver.
Ausbeute: 2,23 g (37 % d. Th.)
Molmasse (GPC, THF als Eluent): Mn =73500 , Mw = 204000 g/mol

**Beispiel 12**: Synthese von Copolymerisat Copo 3

2,5 g RM2, wie in Beispiel 2 beschrieben, wurden in 50 ml Toluol gelöst und mit 12,5 g (0,125 mol) Methylmethacrylat versetzt. Die Lösung wurde entgast und 16 Stunden bei 95 °C unter Stickstoffatmosphäre erhitzt. Das Reaktionsgemisch wurde in 600 ml Methanol und 300 ml Wasser eingetropft. Das ausgefallene Produkt wurde durch Filtration abgetrennt, nochmals in THF gelöst, in Wasser gefällt, abgetrennt und getrocknet. Man erhielt ein gelbes, feines Pulver.
Ausbeute: 7,8 g (52 % d. Th.)
Molmasse (GPC, THF als Eluent): Mn = 26100, Mw = 41600 g/mol

**Beispiel 13**: Synthese von Copolymerisat Copo 4

2,5 g RM3, wie in Beispiel 3 beschrieben, wurden in 50 ml Toluol gelöst und mit 12,5 g (0,125 mol) Methylmethacrylat versetzt. Die Lösung wurde entgast und 16 Stunden bei 95 °C unter Stickstoffatmosphäre erhitzt. Das Reaktionsgemisch wurde in 400 ml Methanol und 200 ml Wasser eingetropft. Das ausgefallene Produkt wurde durch Filtration abgetrennt, nochmals in THF gelöst, in Wasser gefällt, abgetrennt und getrocknet. Man erhielt ein gelbes, feines Pulver.
Ausbeute: 8,5 g (57 % d. Th.)
Molmasse (GPC, THF als Eluent): Mn = 58000, Mw = 92800 g/mol

**Beispiel 14**: Synthese von Copolymerisat Copo 5

0,1 g RM1, wie in Beispiel 1 beschrieben, wurden in 3,5 ml Toluol gelöst und mit 0,5 g (0.005 mol) Methylmethacrylat versetzt. Die Lösung wurde entgast. Das Reaktionsgemisch wurde unter Stickstoff und Kühlung in einer Quarzküvette 16 Stunden bei Raumtemperatur mit einer Xe-Hg-Hochdrucklampe (Lampenleistung = 200 W, Leistung an der Probe = 100 W/$cm^2$) im Abstand von 40 cm zur Strahlungquelle bestrahlt. Das Reaktionsgemisch wurde in 40 ml Methanol eingetropft, das Fällungsmittel im Vakuum entfernt und der Rückstand getrocknet. Man erhielt ein gelbes hochviskoses Produkt.
Ausbeute: 0,2 g (30 % d. Th.)
Molmasse (GPC, THF als Eluent): Mn = 7300, Mw = 14200 g/mol

**Beispiel 15**: Synthese von Copolymerisat Copo 6

3 g RM6, wie in Beispiel 6 beschrieben, wurden in 50 ml Toluol gelöst und mit 12,5 g (0,125 mol) Methylmethacrylat versetzt. Die Lösung wurde entgast und 16 Stunden bei 95 °C unter Stickstoffatmosphäre erhitzt. Das Reaktionsgemisch wurde in 400 ml Methanol und 200 ml Wasser eingetropft. Das ausgefallene Produkt wurde durch Filtration abgetrennt, nochmals in THF gelöst, in Wasser gefällt, abgetrennt und getrocknet. Man erhielt ein gelbes feines Pulver.
Ausbeute: 7,8 g (50,3 % d. Th.)
Molmasse (GPC, THF als Eluent): Mn = 46000, Mw = 88000 g/mol

**Beispiel 16**: Synthese von Copolymerisat Copo 7

5 g RM1, wie in Beispiel 1 beschrieben, und 15 g (0,21 mol) Acrylsäure wurden in 50 ml 1,4-Dioxan gelöst. Man entgaste die Reaktionsmischung sorgfältig und rührte bei 80 °C 23 Stunden. Die Reaktionslösung wurde in 400 ml Toluol gefällt, das ausgefallene Produkt durch Filtration entfernt, nochmals in 1,4-Dioxan gelöst und ein zweites Mal in 400 ml Toluol gefällt. Das isolierte, gelbe, spröde Produkt wurde im Hochvakuum bis zur Gewichtskonstanz getrocknet.
Ausbeute: 13,9 g (69,5 % d. Th.)

**Beispiel 17**: Synthese von Copolymerisat Copo 8

1,5 g RM7, wie in Beispiel 7 beschrieben, und 4,5 g (0,045 mol) Methylmethacrylat wurden in 10 ml Toluol aufgenommen. Das Gemisch wurde sorgfältig entgast und anschließend 7 Stunden bei 95 °C gerührt. Danach wurde die Reaktionsmischung filtriert und der hellgelbe, körnige Filterrückstand mit mehreren kleinen Portionen Tetrahydrofuran gewaschen. Das Pulver wurde im Hochvakuum bis zur Gewichtskonstanz getrocknet.
Ausbeute: 2,0 g (3 3,3 % d. Th.)

**Beispiel 18**: Synthese von Copolymerisat Copo 9

5 g RM5 und 15 g (0,15 mol) Methylmethacrylat wurden in 20 ml Toluol gelöst. Man entgaste die Reaktionsmischung sorgfältig und rührte 7 Stunden bei 95 °C. Die Reaktionslösung wurde in 300 ml Methanol getropft, das Präzipität abfiltriert, nochmals in Toluol gelöst und ein zweites Mal in 300 ml Methanol gefällt. Das hellgelbe Produkt wurde im Hochvakuum bis zur Gewichtskonstanz getrocknet.
Ausbeute: 7,5 g (37,5 % d. Th.)

**Beispiel 19**: Darstellung eines Blends in der Schmelzpresse

9 g Polybutadien (Buna CB 10 von Hüls) wurden in einem konventionellen Laborkneter mit 1 g RM1, wie in Beispiel 1 beschrieben, vermengt. Zur zusätzlichen Vernetzung wurden 72 mg (0,8 Gewichtsprozent auf Gesamtsystem) Dicumylperoxid gemischt. Die Mischung wurde 10 Minuten bei 50 °C geknetet. Das Gemenge wurde anschließend in einer Form bei 150 °C über 60 Minuten vulkanisiert. Der vernetzte, siliconmodifizierte Kautschuk zeigte eine bessere Mischung mit der Siliconkomponente, bedingt durch die chemische Anbindung über die thermolabilen Triazenfunktionen als ein Vergleichsprodukt aus Polybutadien und einem unmodifizierten Siliconöl.

**Beispiel 20**: Vernetzung eines Acrylatsystems

0,2 g RM5, wie in Beispiel 5 beschrieben, wurden mit 5 g (0,5 Mol Acrylatfunktion pro Kilogramm, Viskosität 500 mPas) eines mit Acrylatgruppen funktionalisierten Polydimethylsiloxans gemischt, und 1 Stunde bei 80 °C temperiert. Man erhielt ein orangegelbes, vollständig vernetztes und in organischen Lösungsmitteln unlösliches Produkt.
Ausbeute: 5,2 g (100 % d. Th.)

**Beispiel 21**: Vernetzung durch Wärme

1 g RM5, wie in Beispiel 5 beschrieben, wurde als Film auf eine Glasplatte aufgebracht und anschließend 1 Stunde bei 130 °C im Wärmeschrank gelagert. Man erhielt einen rötlichen vollständig vernetzten und unlöslichen Film.
Ausbeute: 0,95 g (95 % d. Th.)

**Beispiel 22:** Vernetzung durch Licht

1 g RM3, wie in Beispiel 3 beschrieben, wurde als Film auf eine Glasplatte aufgebracht und anschließend 1 Stunde mit UV-Licht (UVA = 56 $mW/cm^2$, UVB = 12 $mW/cm^2$) belichtet. Man erhielt ein rotes vollständig vernetztes, in organischen Lösungsmitteln unlösliches Produkt.
Ausbeute: 0,98 g (98 % d. Th.)

**Patentansprüche**

1. Organosiliciumverbindungen, die mindestens einen Si-C gebundenen organischen Rest aufweisen, welcher mindestens eine Triazengruppe enthält.

2. Organosiliciumverbindungen nach Anspruch 1, welche aus mindestens einer eine Triazengruppe enthaltenden Einheit der allgemeinen Formel 1

$$X-N=N-\underset{\substack{|\\X}}{N}-X \qquad (1),$$

in der

**X** einen Rest der allgemeinen Formel 2,

$$R-SiR^1_mO_{\frac{3-m}{2}} \qquad (2),$$

einen Rest **R²** oder einen halben zweiwertigen Rest **R³** bedeuten, mit der Maßgabe, daß mindestens ein **X** pro Einheit der allgemeinen Formel 1 einen Rest der allgemeinen Formel 2 bedeutet,
und gegebenenfalls Einheiten der allgemeinen Formel 3

$$R^1_nSiO_{\frac{4-n}{2}} \qquad (3),$$

aufgebaut sind, wobei in den vorstehenden allgemeinen Formeln 1 bis 3 jeweils unabhängig voneinander

**R** einen zweiwertigen Si-C-gebundenen, gegebenenfalls mit Hydroxy-, $C_1$- bis $C_6$-Alkoxy-, Mercapto-, Epoxy- oder Cyanogruppen oder Halogenatomen substituierten $C_1$- bis $C_{18}$-Kohlenwasserstoffrest, der gegebenenfalls Ether-, Thioether-, Amin-, Ester-, Carbonyl-, Urethan-, Harnstoff-, Sulfonyl- oder Amidbindungen enthalten kann,

**$R^1$ und $R^2$** ein Wasserstoffatom, eine Hydroxygruppe, ein Halogenatom oder einen einwertigen, gegebenenfalls mit Hydroxy-, $C_1$- bis $C_6$-Alkoxy-, Mercapto-, Epoxy- oder Cyanogruppen oder Halogenatomen substituierten $C_1$- bis $C_{18}$-Kohlenwasserstoff- oder -Kohlenwasserstoffoxyrest, der gegebenenfalls Ether-, Thioether-, Amin-, Ester-, Carbonyl-, Urethan-, Harnstoff-, Sulfonyl- oder Amidbindungen enthalten kann, **$R^3$** einen zweiwertigen, gegebenenfalls mit Hydroxy-, $C_1$- bis $C_6$-Alkoxy-, Mercapto-, Epoxy- oder Cyanogruppen oder Halogenatomen substituierten $C_1$- bis $C_{18}$-Kohlenwasserstoffrest, der gegebenenfalls Ether-, Thioether-, Amin-, Ester-, Carbonyl-, Urethan-, Harnstoff-, Sulfonyl- oder Amidbindungen enthalten kann und

**m und n** 0, 1, 2 oder 3 bedeuten.

**3.** Verfahren zur Herstellung von Organosiliciumverbindungen gemäß Anspruch 1, bei dem Diazoniumsalze mit primären oder sekundären Aminen umgesetzt werden, wobei mindestens einer der Reste an den Diazoniumsalzen oder Aminen einen Si-C gebundenen Organosiliciumrest aufweist.

**4.** Verfahren zur Herstellung von Organosiliciumverbindungen gemäß Anspruch 1, bei dem

A) Triazenverbindungen, welche Reste tragen, die Halogenatome, Carbonsäureanhydrid-, Epoxidgruppen, Gruppen - COCl, oder -NCO aufweisen, mit Gruppen -OH, $-NHR^1$, -COOH oder -SH aufweisenden Organosiliciumverbindungen umgesetzt werden oder

B) Triazenverbindungen, welche Reste tragen, die Gruppen -OH, $-NHR^1$, -COOH, oder -SH aufweisen, mit Halogenatomen, Carbonsäureanhydrid-, Epoxidgruppen, Gruppen -COCl, oder -NCO aufweisenden Organosiliciumverbindungen umgesetzt werden, wobei

**$R^1$** die vorstehenden Bedeutungen aufweist.

**5.** Verfahren zur Herstellung von Organosiliciumverbindungen gemäß Anspruch 1, bei dem Triazenverbindungen, welche Reste tragen, die olefinische Doppelbindungen oder acetylenische Dreifachbindungen aufweisen, mit Si-H Gruppen aufweisenden Organosiliciumverbindungen in Gegenwart von Platin, Rhodium oder deren Verbindungen umgesetzt werden.

**6.** Verfahren zur Herstellung von Homo-, Pfropfco- und Blockcopolymerisaten, bei dem die Organosiliciumverbindungen gemäß Anspruch 1 oder 2 mit radikalisch polymerisierbaren organischen Verbindungen umgesetzt werden.

**7.** Homo-, Pfropfco- und Blockcopolymerisate, erhältlich nach dem Verfahren gemäß Anspruch 6.

**8.** Verfahren zur Vernetzung von Organosiliciumverbindungen und radikalisch polymerisierbaren organischen Verbindungen bei dem die organischen Verbindungen mit den Organosiliciumverbindungen gemäß Anspruch 1 oder 2 vermischt und die Mischung erwärmt oder mit UV-Licht bestrahlt wird.

**9.** Verfahren zur Herstellung von Organosiliciumverbindungen gemäß Anspruch 1 oder 2, bei dem erfindungsgemäße Silane, welche kondensationsfähige Gruppen enthalten, mit kondensationsfähigen Gruppen enthaltenden Silanen und Siloxanen zu den erfindungsgemäßen Organosiloxanen hydrolysiert, kondensiert oder equilibriert werden.

## Claims

**1.** Organosilicon compounds which have at least one Si-C-bonded organic radical which contains at least one triazene group.

**2.** Organosilicon compounds according to Claim 1, which are built up from at least one unit containing a triazene group, of the general formula 1

$$X-N=N-N(X)-X \quad (1),$$

in which

X is a radical of the general formula 2

$$R-SiR^1_mO_{\frac{3-m}{2}} \quad (2),$$

a radical $R^2$ or half a divalent radical $R^3$, with the proviso that at least one X per unit of the general formula 1 is a radical of the general formula 2,

and if appropriate units of the general formula 3

$$R^1_nSiO_{\frac{4-n}{2}} \quad (3),$$

wherein, in the above general formulae 1 to 3, in each case independently of one another,

R is a divalent Si-C-bonded $C_1$- to $C_{18}$-hydrocarbon radical which is optionally substituted by hydroxyl, $C_1$- to $C_6$-alkoxy, mercapto, epoxide or cyano groups or halogen atoms and can optionally contain ether, thioether, amine, ester, carbonyl, urethane, urea, sulphonyl or amide bonds,

$R^1$ and $R^2$ are a hydrogen atom, a hydroxyl group, a halogen atom or a monovalent $C_1$- to $C_{18}$-hydrocarbon or -hydrocarbonoxy radical which is optionally substituted by hydroxyl, $C_1$- to $C_6$-alkoxy, mercapto, epoxide or cyano groups or halogen atoms and can optionally contain ether, thioether, amine, ester, carbonyl, urethane, urea, sulphonyl or amide bonds, $R^3$ is a divalent $C_1$- to $C_{18}$-hydrocarbon radical which is optionally substituted by hydroxyl, $C_1$- to $C_6$-alkoxy, mercapto, epoxide or cyano groups or halogen atoms and can optionally contain ether, thioether, amine, ester, carbonyl, urethane, urea, sulphonyl or amide bonds and

m and n denote 0, 1, 2 or 3.

**3.** Process for the preparation of organosilicon compounds according to Claim 1, in which diazonium salts are reacted with primary or secondary amines, at least one of the radicals on the diazonium salts or amines having an Si-C-bonded organosilicon radical.

**4.** Process for the preparation of organosilicon compound according to Claim 1, in which

A) triazene compounds which carry radicals which have halogen atoms, carboxylic acid anhydride or epoxide groups or -COCl, or -NCO groups are reacted with organosilicon compounds which have -OH, $-NHR^1$, -COOH or -SH groups, or

B) triazene compounds which carry radicals which have -OH, $-NHR^1$, -COOH, or -SH groups are reacted with organosilicon compounds which have halogen atoms, carboxylic acid anhydride or epoxide groups or -COCl, or -NCO groups, wherein

$R^1$ has the above meanings.

**5.** Process for the preparation of organosilicon compounds according to Claim 1, in which triazene compounds which carry radicals which have olefinic double bonds or acetylenic triple bonds are reacted with organosilicon compounds which have Si-H groups in the presence of platinum, rhodium or compounds thereof.

6. Process for the preparation of homopolymers, graft copolymers and block copolymers, in which the organosilicon compounds according to Claim 1 or 2 are reacted with organic compounds which can be polymerized by free radical polymerization.

7. Homopolymers, graft copolymers and block copolymers obtainable by the process according to Claim 6.

8. Process for crosslinking organosilicon compounds and organic compounds which can be polymerized by free radical polymerization, in which the organic compounds are mixed with the organosilicon compounds according to Claim 1 or 2 and the mixture is heated or irradiated with UV light.

9. Process for the preparation of organosilicon compounds according to Claim 1 or 2, in which silanes according to the invention which contain groups which can undergo condensation are hydrolysed, condensed or equilibrated with silanes and siloxanes which contain groups which can undergo condensation to give the organosiloxanes according to the invention.

**Revendications**

1. Composés organosiliciés qui présentent au moins un radical organique à liaison Si-C qui comprend au moins un groupe triazène.

2. Composés organosiliciés suivant la revendication 1, lesquels sont construits à partir d'au moins une unité contenant un groupe triazène de formule générale 1 :

$$X\text{-}N{=}N\text{-}N(X)\text{-}X \qquad (1),$$

dans laquelle :

X représente un radical de formule générale 2 :

$$R\text{-}SiR^1_mO_{\frac{3-m}{2}} \qquad (2),$$

un radical $R^2$ ou un demi-radical $R^3$ bivalent, à la condition que au moins un X par unité de formule générale 1 représente un radical de formule générale 2, et facultativement, des unités de formule générale 3 :

$$R^1_nSiO_{\frac{4-n}{2}} \qquad (3),$$

où dans les formules générales précédentes 1 à 3, de manière indépendante,

R représente un radical hydrocarbure en $C_1$ à $C_{18}$, bivalent, à liaison Si-C, facultativement substitué par des radicaux hydroxyle, alcoxy en $C_1$ à $C_6$, mercapto, époxy ou cyano ou des atomes d'halogène, qui peut facultativement contenir des liaisons éther, thioéther, amino, ester, carbonyle, uréthanne, urée, sulfonyle ou amide;

$R^1$ et $R^2$ représentent un atome d'hydrogène, un radical hydroxyle, un atome d'halogène ou un radical hydrocarbure ou oxyhydrocarbure en $C_1$ à $C_{18}$, monovalent, facultativement substitué par des radicaux hydroxyle, alcoxy en $C_1$ à $C_6$, mercapto, époxy ou cyano ou des atomes d'halogène, qui peut facultativement contenir des liaisons éther, thioéther, amino, ester, carbonyle, uréthanne, urée, sulfonyle

ou amide;

$R^3$ représente un radical hydrocarbure en $C_1$ à $C_{18}$, bivalent, facultativement substitué par des radicaux hydroxyle, alcoxy en $C_1$ à $C_6$, mercapto, époxy ou cyano ou des atomes d'halogène, qui peut facultativement contenir des liaisons éther, thioéther, amino, ester, carbonyle, uréthanne, urée, sulfonyle ou amide, et

m et n représentent 0, 1, 2 ou 3.

**3.** Procédé de préparation de composés organosiliciés suivant la revendication 1, dans lequel des sels de diazonium sont mis à réagir avec des amines primaires ou secondaires, où au moins l'un des radicaux sur les sels de diazonium ou les amines présente un radical organosilicié à liaison Si-C.

**4.** Procédé de préparation de composés organosiliciés suivant la revendication 1, dans lequel :

A) les composés triazène, qui portent des radicaux présentant des atomes d'halogène, des groupes anhydride d'acide carboxylique, époxyde, -COCl ou -NCO sont mis à réagir avec des composés organosiliciés présentant des groupes -OH, $-NHR^1$, -COOH ou -SH, ou

B) les composés triazène, qui portent des radicaux présentant des groupes -OH, $-NHR^1$, -COOH ou -SH sont mis à réagir avec des composés organosiliciés présentant des atomes d'halogène, des groupes anhydride d'acide carboxylique, époxyde, -COCl ou -NCO, où

$R^1$ présente les significations données précédemment.

**5.** Procédé de préparation de composés organosiliciés suivant la revendication 1, dans lequel les composés triazène, qui portent des radicaux présentant des doubles liaisons oléfiniques ou des triples liaisons acétyléniques sont mis à réagir avec des composés organosiliciés présentant des groupes Si-H, en présence de platine, rhodium ou leurs composés.

**6.** Procédé de préparation d'homopolymères, de copolymères greffés et de copolymères séquencés, dans lequel les composés organosiliciés suivant la revendication 1 ou 2 sont mis à réagir avec des composés organiques polymérisables de manière radicalaire.

**7.** Homopolymères, copolymères greffés et copolymères séquencés pouvant être obtenus d'après le procédé suivant la revendication 6.

**8.** Procédé de réticulation de composés organosiliciés et de composés organiques polymérisables de manière radicalaire, dans lequel les composés organiques sont mélangés aux composés organosiliciés suivant la revendication 1 ou 2 et le mélange est chauffé ou est exposé à de la lumière UV.

**9.** Procédé de préparation de composés organosiliciés suivant la revendication 1 ou 2, dans lequel les silanes suivant l'invention, qui contiennent des groupes capables de condensation, sont hydrolysés, condensés ou équilibrés avec des silanes et siloxanes contenant des groupes capables de condensation, en les organosiloxanes suivant l'invention.